Europäisches Patentamt

European Patent Office

Office européen des brevets

(11) Numéro de publication: **0 276 597 B1**

## FASCICULE DE BREVET EUROPEEN

(45) Date de publication de fascicule du brevet:
**23.10.91**

(21) Numéro de dépôt: **87402839.2**

(22) Date de dépôt: **14.12.87**

(51) Int. Cl.⁵: **G07F 7/02**, G07F 7/08,
G06K 19/06

(54) **Procédé de comptage-décomptage, notamment pour des opérations de paiement électronique, à l'aide de plusieurs espaces-mémoires.**

(30) Priorité: **16.12.86 FR 8617563**

(43) Date de publication de la demande:
**03.08.88 Bulletin 88/31**

(45) Mention de la délivrance du brevet:
**23.10.91 Bulletin 91/43**

(84) Etats contractants désignés:
**DE ES GB GR IT NL SE**

(56) Documents cités:
**EP-A- 227 532**
**CH-A- 604 290**
**FR-A- 2 403 597**
**FR-A- 2 503 423**
**FR-A- 2 591 007**

(73) Titulaire: **Remery, Patrick**
**6 rue des Mauvis**
**F-14000 Caen(FR)**

(72) Inventeur: **Remery, Patrick**
**6 rue des Mauvis**
**F-14000 Caen(FR)**

(74) Mandataire: **Mongrédien, André et al**
**c/o BREVATOME 25, rue de Ponthieu**
**F-75008 Paris(FR)**

Rank Xerox (UK) Business Services

## Description

La présente invention a pour objet un procédé de comptage-décomptage. Bien que pouvant s'appliquer à des grandeurs quelconques (nombre d'impulsions, de pièces détachées, d'objets divers...), le procédé de l'invention trouve une application particulière au comptage-décomptage de valeurs fiduciaires, autrement dit de monnaie. Le procédé de l'invention est donc, en particulier, un procédé de paiement électronique.

Dans la demande antérieure EP-A- 227 532 publiée le 01.07.87, il est décrit un procédé de paiement électronique à l'aide d'une carte à mémoire. Cette mémoire est divisée en deux zones de même capacité, l'une dite de paiement (ZP), l'autre dite de rechargement (ZR). Ces zones sont initialement chargées de bits à un premier état logique noté 1 pouvant être mis dans un second état logique noté 0. Les bits ont, dans ces deux zones, un rang déterminé, un bit x dans la première zone étant dit homologue d'un bit y dans la seconde zone, s'ils ont même rang. Des bits homologues définissent alors un couple (x, y), dont les différents états sont (1,1), (1,0), (0,1) et (0,0).

Selon ce procédé, les opérations de débit ou de crédit s'effectuent de la manière suivante. Pour simuler un débit on crée un couple (0,1), et on crée éventuellement un couple (1,0) pour simuler une butée au-delà de laquelle on ne peut pas écrire de couples simulant un débit ; on crée par ailleurs des couples (0,0) pour annuler des opérations antérieures de débit ou des butées. Pour calculer le crédit ou solde d'une telle mémoire après un débit on considère le nombre de couples (1,1) dont le rang est supérieur ou égal à 1 (ou au rang du couple (0,1) de rang le plus élevé qui simule la dernière opération de débit lorsqu'un tel couple (0,1) existe), et inférieur au rang du couple butée (1,0) si une telle butée existe ou au dernier couple (1,1) de la mémoire.

Pour simuler une opération de crédit, on grille des bits dans la zone de rechargement pour annuler des opérations de débit antérieures en faisant passer les couples (0,1) à l'état (0,0), ces couples étant ignorés par la suite ; on annule le couple butée (1,0) en grillant le bit à 1 de la zone de paiement pour faire passer le couple à l'état (0,0), ce couple étant ignoré par la suite et l'on fait passer un couple (1,1) à l'état (1,0) pour créer un nouveau couple butée.

Dans un tel procédé, un couple (1,1) représente l'unité de paiement. Effectuer une opération de crédit ou de débit de X unités nécessite la présence de X couples libres à l'endroit ad hoc dans la mémoire de la carte.

L'inconvénient de ce procédé tient au fait que, selon l'unité choisie, la taille de la mémoire utile peut être assez grande. Par exemple, il est nécessaire d'utiliser une mémoire de 140 000 bits pour créditer la carte de 700F en choisissant comme unité le centime.

Le but de la présente invention est de remédier à cet inconvénient.

Le problème exposé ci-dessus est résolu fer le procédé selon le revendication 1.

A cette fin, on utilise plusieurs espaces mémoire formés chacun d'une zone de paiement et d'une zone de rechargement. Ces espaces mémoire sont rangés selon la valeur que l'on attribue à leurs couples libres (1,1). Ces valeurs sont des multiples d'une unité choisie. Par exemple, un espace mémoire 0 aura pour unité le centime et un espace mémoire 1 aura pour unité le franc.

Pour simplifier l'exposé de l'invention, on supposera que l'on utilise seulement deux espaces mémoire, le principe pouvant se généraliser aisément à plus de deux espaces. Le premier espace noté EMO, sera l'espace des unités (par exemple des centimes), et le second, noté EM1, celui des centaines d'unités, (donc des francs dans l'hypothèse précédente). L'espace EM0 nécessitera une réservation constante d'au moins 99 couples libres (ce qui correspond à 99 cenntimes). La taille de l'espace EM1 sera, elle, fonction du crédit à recharger dans la carte.

Dans l'espace mémoire EM1 ayant l'unité la plus élevée (celle des francs), le nombre de couples libres à l'état (1,1) et de couples de paiement à l'état (0,1) situés entre le début de la zone et le dernier couple de paiement (0,1), couple compris, représente toujours des opérations antérieures de débit, comme dans l'art antérieur cité. Le nombre de couples libres à l'état (1,1) entre le couple de paiement à l'état (0,1) de rang le plus élevé, ou à partir du rang 1 compris s'il n'y a pas de couple de paiement à l'état (0,1) et le couple butée à l'état (1,0) représente le solde de la carte exprimé dans l'unité propre à l'espace mémoire EM1 (donc en francs).

Dans l'espace mémoire EM0 d'unité plus petite (par exemple des centimes), le nombre de couples libres (1,1) et de couples de paiement (0,1) situés entre le début de la zone et le dernier couple de paiement (0,1) compris représente un montant qui, par convention, peut être soit soustrait, soit ajouté au solde lu dans l'espace EM1 d'unité plus grande.

L'utilisation d'un espace mémoire supplémentaire, ayant une unité plus faible, permet d'obtenir la précision souhaitée sans pour autant augmenter la capacité de la mémoire. Par exemple, on pourra effectuer des transactions financières au centime près, sans avoir une mémoire de très grande capacité comme dans l'art antérieur.

Par ailleurs, l'espace mémoire supplémentaire de faible unité n'a pas à présenter une capacité égale à la somme de toutes les unités qu'il faudra pouvoir traiter. En effet, par un mécanisme de retenue, on modifiera le solde de l'espace mémoire de plus forte valeur d'une unité supplémentaire lorsque le montant qui serait à écrire dans l'espace mémoire de faible valeur atteindrait ou dépasserait l'unité de valeur supérieure (par exemple lorsque ce montant atteint ou dépasse 100 centimes). Il suffit que l'espace mémoire de plus faible valeur présente un nombre suffisant de couples libres à l'état (1,1) pour qu'une transaction impliquant des centimes soit toujours possible.

Naturellement, si les opérations de débit ou de crédit portent sur un nombre entier d'unités de l'espace mémoire EM1 ces opérations ne modifieront que le contenu de cet espace mémoire.

Il faut noter qu'une opération portant sur un compte rond ne consomme au total que deux bits. Mais la précision du centime oblige à consommer 4 bits quel que soit le montant. Ne connaissant pas forcément à l'avance le nombre de paiements à effectuer, il peut se poser le problème du dimensionnement de la zone des centimes. A cet effet, les espaces mémoire EM0 et EM1 peuvent être refondus en une seule mémoire de la manière suivante: l'espace des centimes débute à une extrémité de la mémoire, l'espace des francs débute à l'autre extrémité de la mémoire. Les deux espaces sont séparés par le couple butée (état (1,0)) de l'espace des francs, cette butée pouvant être déplacée. Ainsi, tant que l'espace des centimes dispose de 99 couples libres (état 1,1), il sera possible d'effectuer des paiements avec la précision des centimes.

Les caractéristiques de l'invention apparaîtront mieux après la description qui suit, d'exemples de réalisation de l'invention donnés à titre explicatif et non limitatif. Cette description se réfère à des dessins annexés sur lesquels :

- la figure 1 illustre l'état initial de la mémoire,
- la figure 2 illustre l'écriture d'une butée dans la zone de rechargement de la zone des francs,
- la figure 3 illustre une opération de premier paiement,
- la figure 4 illustre une opération de deuxième paiement,
- la figure 5 montre l'état de la mémoire en fin de première utilisation,
- la figure 6 illustre l'opération de détermination du montant à recharger dans une carte,
- la figure 7 illustre l'opération de mise à (0,0) des couples (0,1) et (1,0) lors du rechargement,
- la figure 8 montre l'état de la mémoire après écriture d'une nouvelle butée (1,0),
- la figure 9 montre un organigramme de débit,
- la figure 10 montre un organigramme de rechargement,
- la figure 11 montre une variante de réalisation dans laquelle les espaces mémoire sont contigus,
- la figure 12 illustre, dans cette variante une opération de crédit,
- la figure 13, illustre, toujours dans cette variante une opération de rechargement.

Dans la description qui suit, on emploiera une terminologie évoquant les transactions financières : débit, crédit, solde, francs, centimes, etc... Mais il est clair qu'il ne s'agit là que d'une application particulière de l'invention, celle-ci s'appliquant plus généralement à toute opération de décomptage (réduction du contenu d'un compteur) ou de comptage (augmentation de ce contenu).

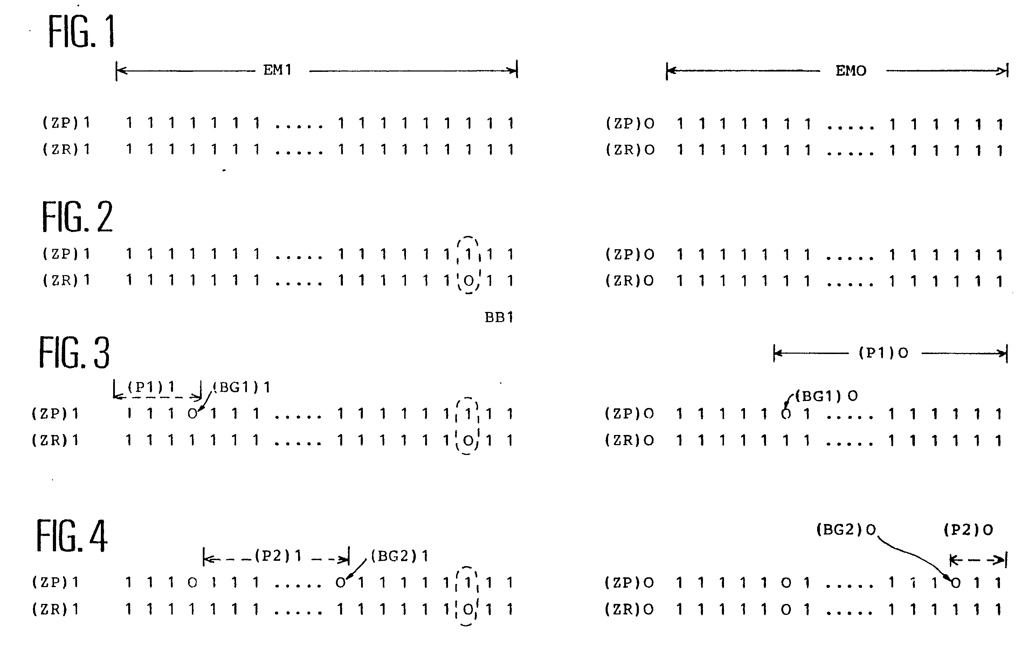

On se placera tout d'abord dans la variante où la mémoire est partagée en deux espaces travaillant avec deux unités différentes, les centimes pour l'un, les francs pour l'autre. On indiquera ultérieurement comment utiliser plus de deux espaces mémoire, dont les unités ne sont pas nécessairement dans un rapport 100. Chacun des espaces mémoire EM0 et EM1 comprend une zone de paiement (respectivement ZP0 et ZP1) et une zone de rechargement (respectivement ZR0 et ZR1). L'état initial de ces différentes zones est représenté sur la figure 1 : tous les bits sont à 1.

Un bit à 0 dans la zonne de rechargement de EM1 définit une butée BB1 limitant le crédit disponible dans EM1.

Une première transaction correspondant à un paiement P1 = 462 unités est effectuée par un terminal point de vente dans lequel est introduite la carte, en comptant, depuis le début de ZP1 un nombre de 1 égal au nombre de centaines d'unités de P1 ici (P1) 1 = 4 francs, et depuis le début de la zone (ZP) un nombre de 1 égal au nombre d'unités de P1 ici (P1) 0 = 62 centimes. Le premier bit à griller (BG1)1 est au rang 4 de la zone ZP et débite la carte de (P1) 1 = 400 unités (ou centimes) ; le second bit à griller est au rang 62 de la zone ZP et débite la carte de (P1) 0 = 62 unités (ou centimes). Ces deux bits sont mis à zéro dans la zone ZP.

Une deuxième transaction correspondant à un paiement d'un montant P2 = 1041 est obtenue en grillant non pas le 103ème bit de la zone (ZP)0 (62 + 41) mais le troisième bit (BG2)0 (ou 3ème couple libre) : la compensation de la centaine manquante est obtenue en grillant le 11ème bit (BG2)1 à partir de (BG1)1 au lieu du 10ème dans la zone ZP1. Pour reconnaître le nouveau bit courant (BG2)0 de la zone (ZP)0, le couple correspondant à (BG1)0 est annulé en grillant son bit homologue dans la zone (ZR)0.

3

Ces paiements sont possibles puisque le nouveau solde de la carte est de 500 unités dans l'espace EM1 moins 3 unités inscrites dans l'espace EM0, soit 497 unités.

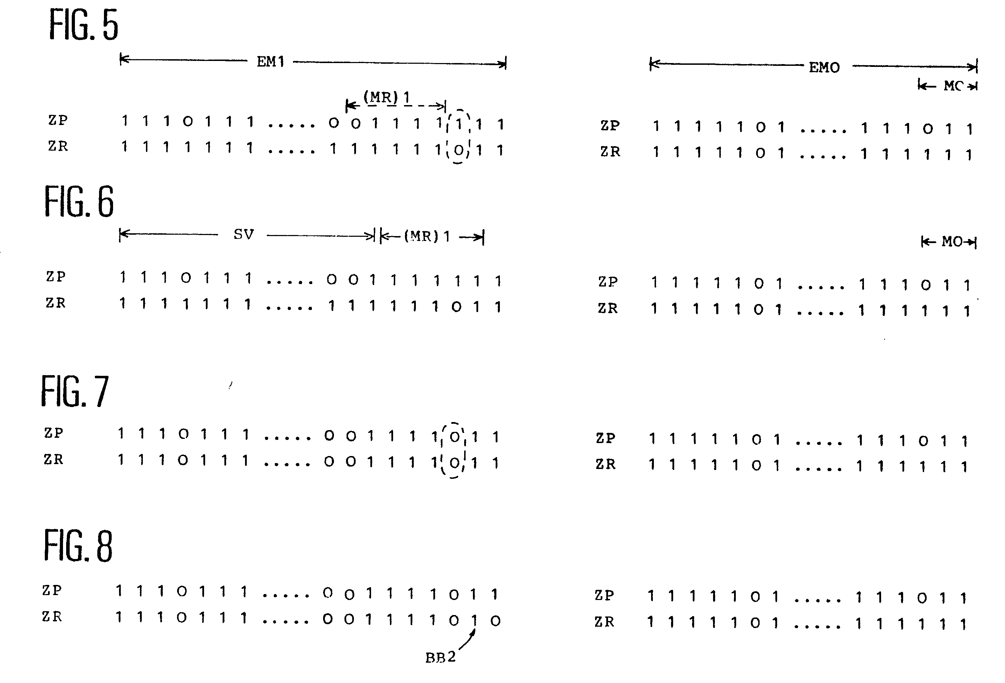

Dans la pratique, le terminal point de vente ne pourra écrire que dans les deux zones de paiement et dans la zone de rechargement de l'espace EM0. L'écriture dans la zone de rechargement de l'espace EM1 sera protégée soit au moyen d'une clé détenue uniquement par l'organisme émetteur de la monnaie, soit en écrivant dans une partie de la mémoire de la carte, chaque rechargement, le nombre de bits à 0 dans la zone (ZR)1, cette écriture ne pourra se faire que sous présentation de la clé de l'organisme émetteur : le terminal point de vente vérifiera la cohérence entre nombre de bits à 0 dans la zone (ZR)1 et le nombre écrit au dernier rechargement. Ces opérations de rechargement s'effectuent donc en introduisant la carte dans un terminal spécial, qui est un terminal de chargement. Ce terminal calcule d'abord le montant résiduel MR en soustrayant au montant résiduel MR1 lu dans l'espace EM1 (c'est le nombre de couples (1,1) qui subsistent entre le dernier couple (0,1) de rang le plus élevé et le couple définissant la butée (1,0) voir figure 5), le montant M0 lu dans EM0. Puis il calcule le nouveau montant à recharger en additionnant au montant résiduel MR, la somme versée SV par le titulaire de la carte. Le terminal cherche ensuite le nouveau bit à griller pour constituer une butée. Pour cela, il compte, depuis le début de la zone 1, un nombre de couples libres (1,1) égal au montant à recharger SV1 + MR1 en centaines d'unités plus une centaine d'unités et depuis le début de la zone 0, un nombre de couples libres (1,1) égal à 100 unités moins (SV0 + MR0) unités. Par exemple recharger 1403 unités revient à créditer 1500 unités dans l'espace EM1 et à inscrire un montant de 97 unités dans l'espace EM0.

La mise à jour de la zone 0 se fait en effaçant le dernier montant inscrit (couple (0,1) devient (0,0) et en inscrivant le nouveau montant (le couple (1,1 devient (0,1)) après comptage des couples libres. Si SV1 = SV, comme c'est le cas sur la figure 6, MR1 = 400 unités M0 = 03, l'espace EM0 n'est pas modifié. Les couples à l'état (1,0), (0,1) et (0,0) sont ignorés dans ce comptage. Si le nombre de couples à l'état (1,1) est inférieur au montant à recharger (SV1 + MR1 + 1) plus 1, dans l'espace EM1 ou si on ne dispose plus de 99 couples libres dans l'espace 0, l'opération est impossible.

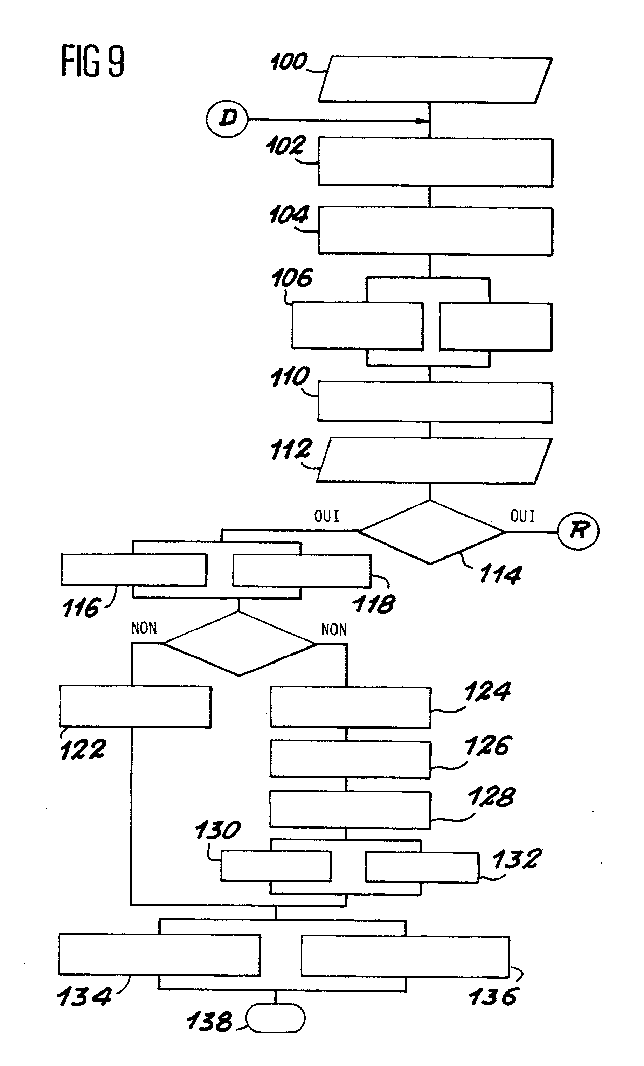

Le rechargement précédent est remis à zéro en faisant passer tous les couples (1,0) et (0,1) à l'état (0,0) dans l'espace EM1 (figure 7). Ces couples (0,0) seront ensuite ignorés dans toutes les opérations ultérieures. Finalement le terminal grille le bit BB2 qui définit la nouvelle butée (figure 8).

Dans la description qui précède le montant inscrit dans l'espace mémoire EM0 vient en déduction du solde disponible dans l'espace mémoire EM1. Mais on peut adopter une autre convention en considérant que le montant écrit dans l'espace EM0 est à ajouter au solde disponible dans l'espace EM1. Ainsi, l'espace EM1 fonctionne toujours de la même manière, mais l'espace EM0 peut fonctionner selon une première variante dans laquelle on soustrait le montant inscrit dans EM0 du solde de EM1 et une seconde variante dans laquelle on ajoute le montant de EM0 à ce solde.

Pour mieux faire comprendre ce principe, on prendra l'exemple suivant, qui correspond toujours au cas d'une mémoire à deux espaces, l'un pour les francs, l'autre pour les centimes.

Le solde initial est supposé égal à 50F. Une première opération de débit de 10F68c est effectuée, puis une seconde de 10F65c. On effectue ensuite un versement de 50F55c.

Dans le tableau suivant, la partie gauche correspondant à la première variante où le montant écrit dans l'espace mémoire des centimes est soustrait au solde de l'espace mémoire des francs (on a donc toujours un nombre négatif dans la colonne "écriture EM0"). La partie droite correspond à la seconde variante où le montant écrit dans l'espace des centimes est ajouté au solde (on a donc toujours un nombre positif dans la colonne "écriture EM0). Naturellement, dans les deux cas le solde global est le même.

4

| | ECRITURE EM1 | ECRITURE EMO | SOLDE | ECRITURE EM1 | ECRITURE EMO |
|---|---|---|---|---|---|
| solde initial | +50 | | 50 | +50 | |
| 1er débit écriture 10,68 | -10 | -68 | 39,32 | -(10+1) =-11 | (100-68) =+32 |
| 2ème débit écriture 10,65 | -(10+1) =-11 | (100-68 -65)=-33 | 28,67 | 10+1 =-11 | (100-65 +32)=+67 |
| Versement : 50,55 | +80 | -78 | 79,22 | +79 | +22 |

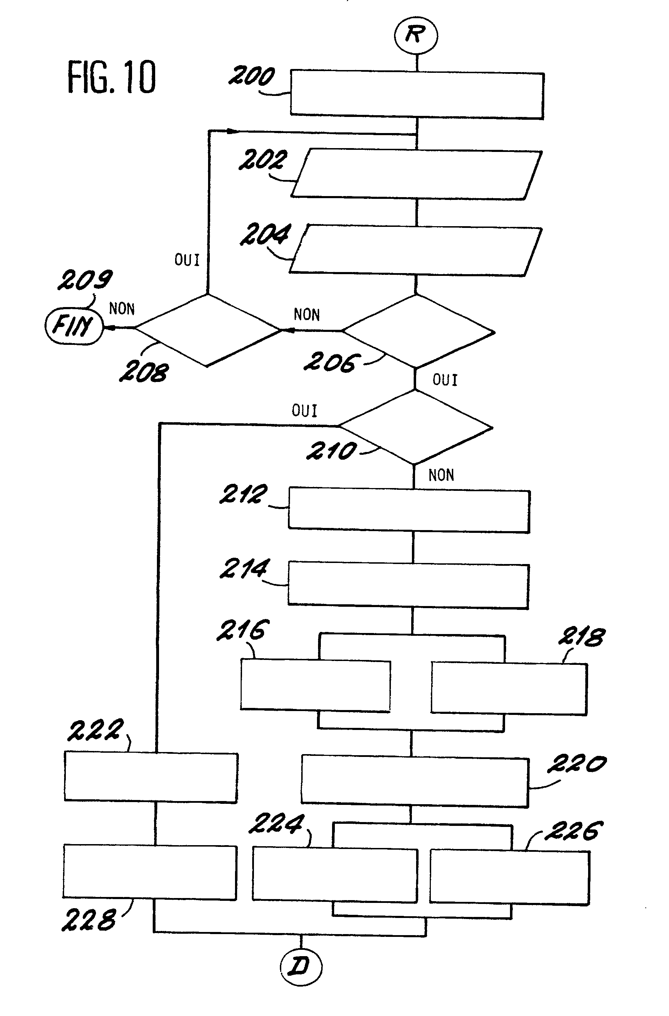

Les figures 9 et 10 représentent des organigrammes illustrant la mise en oeuvre de l'invention, respectivement pour un débit D (figure 9) et pour un rechargement R (figure 10).

Les opérations ou tests apparaissant dans l'organigramme de la figure 9 ont la signification suivante, où $b_0$ et $b_1$ représentent les unités des espaces EMO et EM1, C1 un nombre de couples libres à l'état (1,1), S un solde :

100 : lecture de la mémoire, espace EM0 et espace EM1,

102 : lecture du solde de l'espace EM1 : C1b1,

104 : lecture du montant inscrit dans EM0, soit m0b0,

106 : première variante : solde EM1 : S1b1=C1b1-1

                  solde EM2 : S0b0=100-m0b0,

108 : deuxième variante : solde EM1 : S1b1=C1b1

                  solde EM2 : S0b0=m0b0,

110 : calcul du solde global : S = S1b1+S0b0,

112 : saisie du montant à soustraire d=d1b1+d0b0,

114 : le montant d est-il inférieur ou égal au solde S ?

116 : première variante : on calcule le nouveau montant

                  m0b0+d0b0,

118 : deuxième variante : on calcule le nouveau montant

                  m0b0+(100-d0b0),

120 : m0b0 est-il supérieur à 99 ?

122 : on écrit dans EM0 un couple de bits (0,1) au rang m0b0

     compté à partir du dernier couple (0,1),

124 : on annule les couples (0,1) en les faisant passer à (0,0)

     dans EM0,

126 : on calcule un nouveau montant égal à m0b0-100,

128 : on écrit un couple (0,1) au couple de rang m0b0 de EM0,

130 : première variante : on calcule d1b1+1,

132 : deuxième variante : on calcule d1b1-1,

134 : première variante : on écrit un couple (0,1) au rang d1b1

     compté à partir du dernier couple (0,1) dans EM1,

136 : deuxième variante : on écrit un couple (0,1) au rang d1b1+1

     compté à partir du dernier couple (0,1) en EM1,

138 : fin.

Dans cet organigramme, en cas de réponse négative au test 114 on renvoie au programme de rechargement R décrit figure 10.

Dans l'organigramme de rechargement les opérations ou tests ont la signification suivante :

200 : calcul du versement maximum VM par la relation VM = nombre de couples (1,1)-1-99-une marge- (C1b1+1), où la marge est égale au nombre de paiements avec la précision du centime, estimé entre deux rechargements,

202 : afficher VM,

204 : saisie du versement V exprimé par V1b1+V0b0,

206 : VM est-il supérieur ou égal à V1b1 ?

208 : y-a-t-il un autre versement à effectuer ?

209 : fin du programme,

210 : V0b0 est-il nul ?

212 : calcul du nouveau crédit S égal à l'ancien crédit plus le versement V, avec S = S1b1+S0b0,

214 : annulation des couples (0,1) en (0,0) dans l'espace mémoire EM0,

216 : première variante : écriture d'un couple (0,1) pour obtenir un nombre de couples (1,1) en espace mémoire EM0 égal à m0b0 = 100-S0b0,

218 : deuxième variante : écriture d'un couple (0,1) pour obtenir un nombre de couples (1,1) en espace mémoire EM0 égal à m0b0=S0b0,

220 : annulation des couples (0,1) et (1,0) en (0,0) dans l'espace mémoire EM1,

222 : annulation des couples (0,1) et (1,0) en (0,0) dans l'espace mémoire EM1,

224 : écriture d'une butée (1,0) laissant (S1b1+1) couples (1,1) dans l'espace EM1,

226 : écriture d'une butée (1,0) laissant S1b1 couples (1,1) dans l'espace EM1,

228 : écriture d'une butée (1,0) laissant C1b1 (solde initial dans EM1)+V1b1 couples (1,1) dans l'espace mémoire EM1.

L'une des opérations 224, 226, 228 étant effectuée, on retourne au programme de débit D représenté sur la figure 9.

Dans la description qui précède, les espaces mémoire semblent physiquement séparés. Il ne s'agit là évidemment que d'un artifice de représentation. En réalité tous ces espaces peuvent appartenir à une même mémoire.

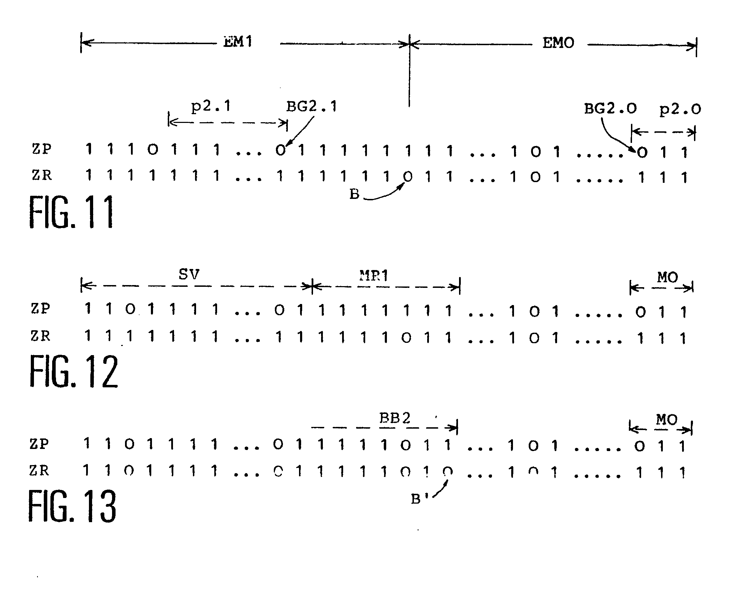

On peut même utiliser une variante avantageuse qui consiste à juxtaposer deux espaces mémoire et à créer une borne de séparation qui peut être déplacée. C'est ce qu'illustrent les figures 11 à 13.

Sur la figure 11, on retrouve sensiblement la situation qui avait été illustrée sur la figure 4 avec cette différence que les espaces mémoire EM1 et EM0 sont mis bout à bout et sont séparés par une borne B (couple 1,0). Lors d'une opération de rechargement illustrée par la figure 12, (qui correspond à la figure 6), il apparait que la borne constituant la butée de l'espace EM1 doit être repoussée de deux rangs. C'est ce qui est fait lors de rechargement (figure 13), la borne séparant les deux espaces venant alors en B'. L'espace mémoire EM1 s'agrandit donc aux dépend de l'espace EM0. Ce processus ne peut naturellement se poursuivre que tant que l'espace mémoire EM0 comprend au moins 99 couples libres (1,1) (ou, d'une façon plus générale b1-1).

On peut généraliser ce principe en utilisant plus de deux espaces mémoire mis bout à bout, qui constituent une seule mémoire. Les bornes séparant les divers espaces peuvent être déplacées. L'espace de plus fort poids est défini par le premier couple de bits et la première butée ; et chaque espace mémoire de plus faible poids commence à compter de la butée (couple à l'état (1,0)) qui le sépare de l'espace de poids directement inférieur.

Dans la description qui précède, l'accent a été mis sur le cas où l'espace mémoire EM0 travaille avec des centimes et l'espace mémoire EM1 avec des francs. L'unité de l'espace EM1 est donc égale à 100 fois l'unité de l'espace EM0. Le dimensionnement d l'espace EM0 doit donc être tel qu'il y ait toujours au moins 99 couples disponibles. Si l'on utilise des unités qui ne sont plus dans le rapport 100, et plus de deux zones, il convient de préciser comment on va dimensionner chaque espace mémoire.

L'unité de chaque espace mémoire est toujours un multiple d'une unité de base, celle de l'espace de plus faible poids EM0. Le contenu d'un espace i, soit EMi, est donné par l'expression $a_i b_i$ où $b_i$ représente l'unité de cet espace et $a_i$ un nombre égal au nombre de couples libres à l'état (1,1) dans cet espace.

Pour représenter un nombre multiple de l'unité de base, dans un système par exemple à trois espaces mémoire travaillant avec des unités $b_0$, $b_1$, $b_2$, il faut que le dimensionnement des trois espaces remplisse les conditions :

$$a_0 b_0 > = b_1 - 1 \text{ et } a_1 b_1 + a_0 b_0 > = b_2 - 1.$$

Si $a_0 b_0 = b_1 - 1$ on a alors $a_1 > = (b_2/b_1) - 1$. Soit q le quotient $b_2/b_1$ alors $a_1$ doit être égal à q, sauf si $b_2 = k_1 b_1$. Dans ce cas $a_1$ doit être égal à $k_1 - 1$. Si $b(i+1) = k_i b_i$, $a(i+1) = k(i+1) - 1$ quel que soit i, on aura une unicité de la représentation du nombre dans les espaces. Si tous les $k_i$ sont égaux, on est dans le cas particulier du système de représentation des nombres tout nombre possède une seule représentation $a_0 + a_1 b_1 + a_n b_n$ avec $0 < = a < = b - 1$.

Un exemple fera comprendre la manière dont on dimensionne divers espaces mémoire. Il correspond au cas où l'on utilise quatre espaces mémoire, EM0 à EM3, travaillant avec des unités de valeurs égales respectivement à 1, 4, 32 et 128. La lettre X représente un couple libre à l'état (1,1) :

```
Espace EM0 avec b0=1      1 2 3
3 couples (a0=3) :        X X X
Espace EM1 avec b1=4      4  8  12 16 20 24 28
7 couples (a1=7) :        X  X  X  X  X  X  X
Espace EM2 b2=32          32 64 96
3 couples (a2=3) :        X  X  X
Espaces EM3 b3=128        128 256 684 512 640  etc...
                          X   X   X   X   X
```

A titre d'exemple, on peut utiliser des mémoires de 50 mots de 32 bits, dont 28 sont utiles (4 bits sont réservés pour le système d'exploitation de la carte). Les tailles des zones de paiement et de rechargement sont donc de 25×28 = 700 bits. Le nombre de bits grillés par paiement est de 2 en considérant que la précision des centimes sera toujours nécessaire. Le nombre théorique de paiements est de 700-99 divisé par 2 soit 300. Ce nombre est approximatif compte tenu des 2 bits supplémentaires grillés par rechargement nécessaire pour définir la butée, des bits restant en fin de validité de la carte (rechargement et paiement minima), et du paiement de somme ronde ne consommant qu'un seul bit.

De façon plus précise on peut prendre l'exemple d'un rechargement constant minimum de 10000 unités et de paiements moyens de 1000 unités, la moitié des paiements exigeant une précision de l'unité. Le nombre de butées inscrites est donné par le nombre de rechargements. A raison de 10 paiements par rechargement, le nombre de bits grillés par rechargement est de 16 par zone, d'où le nombre de rechargements est égal à 700-100-99-5 (bits utilisables) divisés par 16 soit 31. On ne peut donc effectuer que (700-100-99-5 = 465 divisé par 1,5) soit 310 paiements. D'où une consommation moyenne de 4,51 bits par opération. Le montant global de ces paiements s'élève ainsi $310 \times 1000 = 310000$ unités soit, si l'unité choisie est le centime, 3100 Francs. Dans ce cas, ce procédé améliore la précision sur les unités de 100 au détriment du nombre total de paiements diminué de 43%.

## Revendications

1. Procédé de comptage-décomptage, notamment de valeurs fiduciaires, au moyen d'opérations appliquées à un espace mémoire, cet espace mémoire étant divisé en deux zones de même capacité, l'une dite de paiement (ZP), l'autre dite de rechargement (ZR), ces zones étant initialement chargées de bits à un premier état logique noté 1 et pouvant être mis dans un second état logique noté 0, les bits ayant, dans ces deux zones, un rang déterminé, un bit x dans la première zone étant dit homologue d'un bit y dans la seconde zone, s'ils ont même rang, ces deux bits définissant alors un couple <x, y>, des couples <1,1>,<1,0>, <0,1> et <0,0> pouvant être ainsi écrits dans la mémoire, un tel procédé consistant à :
   - simuler une opération de débit en créant un couple <0,1>, éventuellement en créant un couple <1,0> pour simuler une butée au-delà de laquelle on ne peut pas écrire de couples simulant un débit, à créer des couples <0,0> pour annuler des opérations antérieures de débit ou des butées,
   - considérer que le contenu (ou solde) disponible dans cet espace mémoire est égal au nombre de couples <1,1> dont le rang est supérieur ou égal à 1 ou au rang du couple <0,1> de rang le plus élevé qui simule la dernière opération de débit lorsqu'un tel couple <0,1> existe, et inférieur au rang du couple butée <1,0> si une telle butée existe ou au dernier couple <1,1> de la mémoire,
   - simuler une opération de crédit en grillant des bits dans la zone de rechargement pour annuler des opérations de débit antérieures en faisant passer les couples <0,1> à l'état <0,0>, ces couples étant ignorés par la suite, en annulant un couple butée <1,0> en grillant le bit à 1 de la zone de paiement pour faire passer le couple à l'état <0,0>, ce couple étant ignoré par la suite, et en faisant passer un couple <1,1> à l'état <1,0> pour créer un nouveau couple butée,
   - utiliser un autre espace mémoire (EM0) organisé comme le premier (EM1) en une zone de paiement et une zone de rechargement, l'unité b0 correspondant à un couple de bits <1,1> de cet autre espace mémoire (EM0) étant un sous-multiple de l'unité b1 du premier espace mémoire, le nombre a0 de couples libres à l'état <1,1> dans cet autre espace mémoire (EM0) étant toujours au moins égal à b1-1, dans l'espace mémoire (EM0) le nombre de couples libres <1,1> et de couples de paiement <0,1> situés entre le premier couple de l'espace mémoire compris et le dernier couple de paiement <0,1> compris, représentant par convention un montant qui est soit soustraire, soit à ajouter au solde de l'espace mémoire (EM1), le montant inscrit dans l'espace mémoire (EM0) étant toujours limité à b1-1, une opération de réduction de ce solde (débit) ou d'augmentation de ce solde (rechargement) affectant le premier (EM1) et/ou le second espace mémoire (EM0), de telle manière que si le montant M qui devrait être inscrit dans l'espace mémoire (EM0) dévient supérieur à la valeur limite b1-1, une unité supplémentaire est prise en compte dans l'espace mémoire EM1 et le nouveau montant réellement inscrit dans l'espace mémoire EM0 est pris égal à M-b1.

2. Procédé selon la revendication 1, caractérisé par le fait que l'espace mémoire EM1 travaille avec des unités $b_0$ auxquelles on attribue la valeur 100 et l'espace mémoire EM0 avec des unités $b_1$ auxquelles on attribue la valeur 1, un tel procédé permettant d'effectuer des transactions portant sur des francs et des centimes, ou des dollars et des cents.

3. Procédé selon la revendication 1, notamment de valeurs fiduciaires, comprenant plusieurs espaces mémoire travaillant avec des unités dont la valeur est un multiple d'une unité de base, chaque espace mémoire coopérant avec l'espace mémoire qui précède d'unité moindre.

4. Procédé selon la revendication 1, caractérisé par le fait que le premier et le second espaces mémoire forment une seule mémoire ayant une première et une seconde extrémités, l'espace mémoire du premier espace commençant à la première extrémité de la mémoire et le second espace mémoire commençant à la seconde extrémité, les deux espaces étant séparés par un couple butée <1,0> qui peut être déplacé.

## Claims

1. Procedure for counting/counting down, in particular for fiduciary currency, by means of operations applied to a memory space, this memory space being divided into two zones of the same capacity, one known as the payment zone (ZP), the other known as the reloading zone (ZR), these zones being initially loaded with bits which are in a first logic state designated 1 and are capable of being put in a second logic state designated 0, the bits having, in these two zones, a given rank, a bit x in the first zone being said to be homologous with a bit y in the second zone, if they have the same rank, these two bits then defining a pair <x, y>, pairs <1,1>, <1,0>, <0,1> and <0,0> being capable thus of being written in the memory, such a procedure consisting in:

- simulating a debit operation by creating a pair <0,1>, possibly by creating a pair <1,0> in order to simulate a stop beyond which it is not possible to write pairs simulating a debit, and in creating pairs <0,0> in order to cancel previous debit operations or stops,
- considering that the content (or balance) available in this memory space is equal to the number of pairs <1,1>, the rank of which is superior or equal to 1 or to the rank of the pair <0,1> of highest rank which simulates the last debit operation when such a pair <0,1> exists, and inferior to the rank of the stop pair <1,0> if such a stop exists or to the last pair <1,1> of the memory,
- simulating a credit operation by gating bits in the reloading zone in order to cancel previous debit operations by making the pairs <0,1> pass to the state <0,0>, these pairs being ignored subsequently, by cancelling a stop pair <1,0> by gating the bit at 1 of the payment zone in order to make the pair pass to the state <0,0>, this pair being ignored subsequently, and by making a pair <1,1> pass to the state <1,0> in order to create a new stop pair,
- using another memory space (EM0), organised like the first (EM1) in a payment zone and a reloading zone, the unit b0 which corresponds to a bit pair <1,1> of this other memory space (EM0) being a sub-multiple of the unit b1 of the first memory space, the number a0 of free pairs in the state <1,1> in this other memory space (EM0) always being at least equal to b1-1, the number of free pairs <1,1> and of payment pairs <0,1> situated, in the memory space (EM0), between the first pair of the memory space inclusive and the last payment pair <0,1> inclusive representing by convention an amount which is either to be subtracted from or added to the balance of the memory space (EM1), the amount entered in the memory space (EM0) always being limited to b1-1, an operation of reduction of this balance (debit) or of increase of this balance (reloading) affecting the first (EM1) and/or the second memory space (EM0) in such a manner that, if the amount M which ought to be entered in the memory space (EM0) becomes greater than the limit value b1-1, a supplementary unit is taken into account in the memory space EM1 and the new amount actually entered in the memory space EM0 is taken to be equal to M-b1.

2. Procedure according to Claim 1, characterized in that the memory space EM1 works with units $b_0$, which are attributed the value 100, and the memory space EM0 with units $b_1$, which are attributed the value 1, such a procedure making it possible to carry out transactions relating to francs and centimes or to dollars and cents.

3. Procedure according to Claim 1, in particular for fiduciary currency, comprising a number of memory spaces working with units, the value of which is a multiple of a basic unit, each memory space interacting with the preceding smaller-unit memory space.

4. Procedure according to Claim 1, characterised in that the first and the second memory spaces form a single memory, which has a first and a second end, the memory space of the first space beginning at the first end of the memory and the second memory space beginning at the second end, the two spaces being separated by a stop pair <1,0> which can be displaced.

**Patentansprüche**

1. Verfahren zum Auf- und Abzählen, insbesondere von Geldwerten mittels Operationen, die an einem Speicherraum angewendet werden, wobei dieser Speicherraum in zwei Zonen gleicher Kapazität unterteilt ist, die Bezahlzone (ZP) und Wiederaufladezone (ZR) genannt werden, wobei diese Zonen anfänglich mit Bits eines ersten logischen Zustandes "1" geladen sind und in einen zweiten logischen Zustand "0" versetzt werden können, wobei die Bits in diesen zwei Zonen einen vorbestimmten Rang haben, ein Bit x in der ersten Zone das Homolog eines Bit y in der zweiten Zone genannt wird, wenn sie den gleichen Rang haben, wobei diese zwei Bits somit ein Paar <x,y> bilden und Paare <1,1>, <1,0>, <0,1> und <0,0> auf diese Weise in den Speicher geschrieben werden können, umfassend die Schritte:

Simulieren einer Debit-Operation, indem ein Paar <0,1> erzeugt wird, gegebenenfalls indem ein Paar <1,0> erzeugt wird, um einen Stopp zu bilden, über den hinaus man keine Paare einschreiben kann, die einen Debit simulieren, um Paare <0,0> zu erzeugen, um die vorhergehenden Debitoperationen oder Stopps zu annullieren,

Beachten, daß der Inhalt (oder Saldo), der in diesem Speicherraum verfügbar ist, gleich der Anzahl der Paare <1,1> ist, deren Rang größer oder gleich 1 oder vom Rang des Paares <0,1> höchsten Rangs ist, das den letzten Debitvorgang simumuliert, wenn ein solches Paar <0,1> existiert, und kleiner als der Rang des Stoppaares <1,0> ist, wenn ein solcher Stopp existiert oder kleiner als das letzte Paar <1,1> des Speichers ist,

Simulieren eines Kreditvorgangs, indem die Bits der Wiederaufladezone gesiebt werden, um vorhergehende Debitoperationen zu annullieren, indem man die Paare <0,1> im Zustand <0,0> durchläßt, wobei diese Paare nachfolgend ignoriert werden, indem ein Stoppaar <1,0> annulliert wird, indem das Bit auf "1" der Bezahlzone ausgesiebt wird, um das Paar beim Zustand <0,0> durchzulassen, wobei dieses Paar nachfolgend ignoriert wird, und indem ein Paar <1,1> im Zustand <1,0> durchgelassen wird, um ein neues Stoppaar zu erzeugen,

Verwenden eines weiteren Speicherraums (EMO), der wie der erste (EM1) organisiert ist in eine Bezahlzone und eine Wiederaufladezone, wobei die Einheit b0 entsprechend einem Bitpaar <1,1> dieses weiteren Speicherraums (EMO) ein Untervielfaches der Einheit b1 des ersten Speicherraums ist, die Anzahl a0 der freien Paare im Zustand <1,1> dieses anderen Speicherraums (EMO) stets wenigstens gleich b1-1 ist im Speicherraum (EMO), wobei die Anzahl der freien Paare <1,1> und der Bezahlpaare <0,1>, die zwischen dem ersten enthaltenen Paar des Speicherraums und dem letzten enthaltenen Bezahlpaar <0,1> liegen, absprachegemäß einen Betrag repräsentieren, der entweder abzuziehen oder hinzuzufügen ist von bzw. zu dem Betrag des Speicherraums (EM1), wobei der in den Speicherraum (EMO) eingeschriebene Betrag stets auf b1-1 begrenzt ist, ein Verminderungsvorgang dieses Saldos (Debit) oder eine Erhöhung dieses Saldos (Wiederaufladung) den ersten (EM1) und/oder den zweiten Speicherraum (EMO) derart beeinflussen, daß wenn der Betrag M, der in den Speicherraum (EMO) eingeschrieben werden muß, größer als der Grenzwert b1-1 wird, eine zusätzliche Einheit in dem Speicherraum (EM1) in Betracht gezogen wird und der neue Betrag, der reell in den Speicherraum (EMO) eingeschrieben wird, gleich M-b1 genommen wird.

2. Verfahren nach Anspruch 1, dadurch gekennzeichnet, daß der Speicherraum EM1 mit Einheiten $b_0$ arbeitet, denen man den Wert 100 zuweist, und der Speicherraum EMO mit Einheiten $b_1$ arbeitet, denen man den Wert 1 zuweist, wobei ein solches Verfahren erlaubt, Transaktionen in Francs und Sentimes oder Dollars und Cents auszuführen.

3. Verfahren nach Anspruch 1, insbesondere Geldwerte, enthaltend mehrere Speicherräume, die mit Einheiten arbeiten, deren Wert ein Vielfaches einer Grundeinheit ist, wobei jeder Speicherraum mit dem Speicherraum kooperiert, der um eine Einheit weniger vorangeht.

4. Verfahren nach Anspuch 1, dadurch gekennzeichnet, daß die ersten und zweiten Speicherräume einen einzigen Speicher bilden, der ein erstes und ein zweites Ende aufweist, wobei der Speicherraum des ersten Raums am ersten Ende des Speichers und der zweite Speicherraum am zweiten Ende beginnt, wobei die zwei Räume von einem Stoppaar <1,0> getrennt sind, das verschoben werden kann.

EP 0 276 597 B1

# FIG. 1

|← —————— EM1 —————— →|

(ZP)1　1 1 1 1 1 1 1 ..... 1 1 1 1 1 1 1 1 1
(ZR)1　1 1 1 1 1 1 1 ..... 1 1 1 1 1 1 1 1 1

|← —————— EMO —————— →|

(ZP)O　1 1 1 1 1 1 1 ..... 1 1 1 1 1 1
(ZR)O　1 1 1 1 1 1 1 ..... 1 1 1 1 1 1

# FIG. 2

(ZP)1　1 1 1 1 1 1 1 ..... 1 1 1 1 1 1 (1) 1 1
(ZR)1　1 1 1 1 1 1 1 ..... 1 1 1 1 1 1 (0) 1 1

BB1

(ZP)O　1 1 1 1 1 1 1 ..... 1 1 1 1 1 1 1
(ZR)O　1 1 1 1 1 1 1 ..... 1 1 1 1 1 1 1

# FIG. 3

|←(P1)1→| ,(BG1)1

(ZP)1　1 1 1 0 1 1 1 ..... 1 1 1 1 1 1 (1) 1 1
(ZR)1　1 1 1 1 1 1 1 ..... 1 1 1 1 1 1 (0) 1 1

|← —— (P1)O —— →|

,(BG1)O

(ZP)O　1 1 1 1 1 0 1 ..... 1 1 1 1 1 1
(ZR)O　1 1 1 1 1 1 1 ..... 1 1 1 1 1 1

# FIG. 4

|← —(P2)1— →| ,(BG2)1

(ZP)1　1 1 1 0 1 1 1 ..... 0 1 1 1 1 1 (1) 1 1
(ZR)1　1 1 1 1 1 1 1 ..... 1 1 1 1 1 1 (0) 1 1

(BG2)O　　(P2)O

(ZP)O　1 1 1 1 1 0 1 ..... 1 1 1 0 1 1
(ZR)O　1 1 1 1 1 0 1 ..... 1 1 1 1 1 1

# FIG. 5

|←——————— EM1 ———————→|  |←——————— EMO ———————→|
|←— MC —→|

(MR) 1

ZP  1 1 1 0 1 1 1 ..... 0 0 1 1 1 1 (1) 1 1     ZP  1 1 1 1 1 0 1 ..... 1 1 1 0 1 1
ZR  1 1 1 1 1 1 1 ..... 1 1 1 1 1 1 (0) 1 1     ZR  1 1 1 1 1 0 1 ..... 1 1 1 1 1 1

# FIG. 6

|←——— SV ———→|←— (MR) 1 —→|     |←— MO —→|

ZP  1 1 1 0 1 1 1 ..... 0 0 1 1 1 1 1 1 1     ZP  1 1 1 1 1 0 1 ..... 1 1 1 0 1 1
ZR  1 1 1 1 1 1 1 ..... 1 1 1 1 1 1 0 1 1     ZR  1 1 1 1 1 0 1 ..... 1 1 1 1 1 1

# FIG. 7

ZP  1 1 1 0 1 1 1 ..... 0 0 1 1 1 1 (0) 1 1     ZP  1 1 1 1 1 0 1 ..... 1 1 1 0 1 1
ZR  1 1 1 0 1 1 1 ..... 0 0 1 1 1 1 (0) 1 1     ZR  1 1 1 1 1 0 1 ..... 1 1 1 1 1 1

# FIG. 8

ZP  1 1 1 0 1 1 1 ..... 0 0 1 1 1 1 0 1 1     ZP  1 1 1 1 1 0 1 ..... 1 1 1 0 1 1
ZR  1 1 1 0 1 1 1 ..... 0 0 1 1 1 0 1 0     ZR  1 1 1 1 1 0 1 ..... 1 1 1 1 1 1

BB2

EP 0 276 597 B1

# FIG 9

100

D

102

104

106

110

112

OUI                    OUI        R

114

116        118

NON              NON

124

122

126

128

130        132

134              136

138

FIG. 10

|← —————— EM1 —————— →|← —————— EMO —————— →|

|← p2.1 —→| BG2.1                                    BG2.0  p2.0
|← — — →|                                            |← — →|

ZP  1 1 1 0 1 1 1 ... 0 1 1 1 1 1 1 1 1 ... 1 0 1 ..... 0 1 1

ZR  1 1 1 1 1 1 1 ... 1 1 1 1 1 1 0 1 1 ... 1 0 1 ..... 1 1 1

                              B

## FIG. 11

|← — — — SV — — — →|← — — MR1 — — →|              |← MO →|

ZP  1 1 0 1 1 1 1 ... 0 1 1 1 1 1 1 1 1 ... 1 0 1 ..... 0 1 1

ZR  1 1 1 1 1 1 1 ... 1 1 1 1 1 1 0 1 1 ... 1 0 1 ..... 1 1 1

## FIG. 12

                    |← — — BB2 — →|              |← MO →|

ZP  1 1 0 1 1 1 1 ... 0 1 1 1 1 1 0 1 1 ... 1 0 1 ..... 0 1 1

ZR  1 1 0 1 1 1 1 ... 0 1 1 1 1 1 0 1 0 ... 1 0 1 ..... 1 1 1

                              B'

## FIG. 13